# EUROPEAN PATENT SPECIFICATION

(11) **EP 0 635 300 B1**
(45) Date of publication and mention of the grant of the patent: **26.01.2000**
(21) Application number: 94111169.2
(22) Date of filing: 18.07.1994
(51) Int. Cl.: B01J 20/12, G01N 30/48, B01D 15/08

(54) **Column packings for liquid chromatography**
Säulenpackung für Flüssigkeitschromatographie
Garnissage de colonne pour la chromatographie en phase liquide

(30) Priority: 19.07.1993 JP 20000893
(43) Date of publication of application: 25.01.1995
(73) Proprietor: SNOW BRAND MILK PRODUCTS CO., LTD., Sapporo-shi, Hokkaido 065 (JP)
(72) Inventor: Tomizawa, Akira, Iruma-shi, Saitama (JP); Shigematsu, Akinori, Kawagoe-shi, Saitama (JP); Matsuda, Hisashi, Kodaira-shi, Tokyo (JP); Koga, Naoki, c/o TOTO LTD., 1-1, Nakashima 2-chome, Kitakyushu-shi, Fukuoka (JP); Hisada, Keisuke, c/o Toto Ltd., Kitakyushu-shi, Fukuoka (JP)
(74) Representative: Reitzner, Bruno, Dr.

(56) References cited:
- EP-A- 0 297 901
- EP-A- 0 318 236
- FR-A- 2 328 508
- US-A- 2 968 633
- DATABASE WPI Week 7726, Derwent Publications Ltd., London, GB; AN 77-46409Y & SU-A-485 752 (PETROCHEM PROC. INST.)

## Description

### BACKGROUND OF THE INVENTION

### 1. Field of the Invention

The present invention relates to column packings for liquid chromatography and methods for separating materials using the column packings. More particularly, the present invention relates to column packings for liquid chromatography comprising porous ceramics granules having a hydrophilic surface which are prepared by calcining a crystalline clay mineral having fibrous structure, and a method for separating materials using the column packings.

### 2. Prior Art

Liquid chromatography is a chromatography utilizing liquids as mobile phase. Various types of liquid chromatography have been developed for separating.

Liquid chromatography is classified, depending on the principle of separation, into ion-exchange chromatography, partition chromatography, adsorption chromatography, gel permeation chromatography, affinity chromatography or the like. Also, it is classified, depending on the method of operation, into downward flow method, upward flow method, high performance liquid chromatography or the like.

Among them, high performance liquid chromatography (HPLC) has high separating performance, and the throughput speed is very high so that it has recently spread rapidly. The HPLC uses essentially uniform and extremely fine spherical granules as stationary phase (which is referred to as "column packings" hereinafter).

As conventional column packings for HPLC, besides silica gel, modified silica gels in which silica gel is modified with an octadecyl group or an amino group or the like, ion exchange resin comprising synthetic polymers, such as polystyrene and polyvinyl, and column packings comprising natural polymers or the like have been used.

Silica gel has been used for separating lipid-related materials as column packings for adsorption chromatography, utilizing the excellent adsorption performance of silanol groups existing in a great number on internal surfaces of the pores. However, silica gel may be easily dissolved in water and has a very low resistance to high pH eluents. Thus it could be hardly used for separating samples using such eluents.

On the other hand, as inorganic column packings, active china clay and synthetic zeolite have been conventionally used for separation by adsorption or the like. They had, however, no sufficient separation performances as column packings for chromatography and could not be used for HPLC.

In addition, column packings for chromatography prepared from hydroxy apatite as raw material which was recently developed have a high mechanical strength and low solubility in eluents and thus they are good column packings. They, however, do not adsorb materials having no charge, such as lipids, although they adsorb materials having charged functional groups, such as proteins. Accordingly, they are not suitable for separating lipid-related materials.

US-A-2 9 68 633 discloses an absorptive porous mass useful in the separation of components of liquid organic mixtures comprising randomly oriented particels of a mineral selected from the group consisting of attapulgite and sepiolite, said mass having an equivalent pore diameter of from about 10 to 15 mm. This mass is not present in granular form and does not exhibit a hydrophilic surface.

Under such circumstances, there is a need for the development of column packings which have high resistance to eluents having a high polarity and a high pH value and can separate lipid-related materials in high efficiency.

On the other hand, techniques of using ceramics have made a rapid progress recently, and ceramics having various functions have been developed.

For example, Japanese Unexamined Patent Publication No.Hei-3-8752 discloses a technique of preparing porous ceramics by calcining a raw material containing clay minerals having a fibrous crystal structure, such as sepiolite.

In addition, Japanese Unexamined Patent Publication No.Hei-4-183393 discloses a technique of fixing enzymes in such porous granules.

However, a use of the porous ceramics as column packings for chromatography has not been known.

### SUMMARY OF THE INVENTION

Under such circumstances, an object of the present invention is to provide column packings for liquid chromatography which are very stable to eluents having high polarity and/or pH value and may be used for separating lipid-related materials.

Another object of the present invention is to provide methods for separating lipids using the column packings for liquid chromatography.

Still another object of the present invention is to provide methods for separating vitamins using the column packing for liquid chromatography.

To attain the objects of the present invention, the inventors have found that if porous ceramics granules which have hydrophilic surface and are prepared by calcining crystalline clay mineral having fibrous structure are used as column packings for liquid chromatography, the ceramics granules are very stable to eluents having high polarity and/or high pH value and can separate lipid-related materials which could be separated only with difficulty

Thus, in accordance with the present invention, there are provided column packings for liquid chromatography comprising porous ceramic granules, characterized in that the porous ceramic granules have hydrophilic surfaces and a median pore diameter in the range from 0.001µm to 0.1µm, and that the porous ceramic granules are prepared by the steps comprising
(a) calcining granules of a crystalline clay mineral having a fibrous structure and a grain size in the range from 1 to 100 µm;
(b) subjecting the granules to an acid treatment to render the surfaces of said granules hydrophilic; and
(c) calcining the granules a second time to avoid any decrease in pore volume, the resultant porous ceramic granules having an SiO₂ content of 60% or more.

Preferably, the fibrous structure is a fibrous crystal structure containing parallelepiped intracrystalline tunnes along the fibres.

Preferably, the crystaline clay mineral is sepolite or attapulgite.

Preferably, the MgO content of the porous ceramic granules is 30% or less and the SiO₂ content of the porous ceramic granules is 60% or more.

In accordance with the present invention there is also provided a method or separating lipids, such as Phospholipids, comprising the steps of: filling the colum packings for liquid chromatography, as defined above, into a column; injecting a sample containing lipids; and flowing an eluent through the column to separate and elute the lipids in the sample.

In accordance with the present invention, there is also provided a method for separating vitamins, such as fat-soluble vitamins, comprising the steps of: filling the column packings for liquid chromatography, as defined above, into a column; injecting a sample containing vitamins; and flowing an eluent through the column to separate and elute the vitamins in the sample.

### BRIEF DESCRIPTION OF THE DRAWINGS

Fig.1 shows an X-ray diffraction pattern of sepiolite after the first calcination. "A" corresponds to a peak of crystobalite, "B" corresponds to a peak of quartz, and "C" corresponds to peaks of enstatite.
Fig.2 shows an X-ray diffraction pattern of sepiolite treated with an acid. "B" corresponds to a peak of quartz and a broad peak appearing at from 15 to 30° corresponds to a peak of non-crystalline SiO₂.
Fig.3 shows an X-ray diffraction pattern of sepiolite after the second calcination. "B" corresponds to a peak of quartz and a broad peak appearing at from 15 to 30° corresponds to a peak of non-crystalline SiO₂.
Fig.4 shows a chromatogram of phosphatidylcholine (PC) and sphingomyelin (SPM) using the column packings for liquid chromatography of the present invention.
Fig.5 shows variations of the retention time by a continuous use of HPLC columns using silica gel (SC) and the column packings of the present invention. "○" shows the retention time of sphingomyelin by the present invention, "□" shows that of phosphatidylcholine of the present invention, "●" shows that of sphingomyelin on a silica gel column and "X" shows phosphatidylcholine on a silica gel column, respectively.
Fig.6 shows a chromatogram of vitamin K₁ and vitamin D₃ using the column packings for liquid chromatography of the present invention.

### DETAILED DESCRIPTION OF THE PRESENT INVENTION

The crystalline clay mineral having fibrous structure used as raw materials of the present invention may include sepiolite, attapulgite, palygorskite.

Sepiolite is a clay mineral having the chemical formula Mg₈Si₁₂O₃₀(OH₂)₄·6 to 8H₂O. Among clay minerals, sepiolite has a fibrous crystalline structure which is different from that of minerals, such as kaolinite, montmorillonite having a layered structure. The crystals contain palallelepiped intracrystalline tunnels of uniform size along the fiber, and their cross section is about 1.35 x 0.67nm². Aggregates of sepiolite have a large pore volume having peaks of pore sizes at 0.001µm and 0.02µm. It is utilized in many fields such as decoloring agents, water absorption agents, deodorizing agents, oil absorption agents.

Attapulgite is a crystalline clay mineral having a fibrous crystal structure containing parallelepiped intracrystalline tunnels along the fiber, like sepiolite, and has the chemical formula Mg₅Si₈O₂₀(OH)₂(OH₂)₄·4H₂O. It is utilized in many fields, such as adsorbing agents, slurries for drilling. Attapulgite is also referred to as palygorskite.

Various clay minerals, such as talc containing SiO₂ and MgO as principal components, and kaolinite, montmorillonite containing SiO₂ as a principal component, in addition to the above crystalline clay mineral having fibrous crystal structure containing parallelepiped intracrystalline tunnel along the fiber, may be used as raw material for the column packings for liquid chromatography of the present invention.

The column packings for chromatography of the present invention may be prepared for example by a method described hereinafter.

The column packings may be prepared by the steps of crushing the raw material described above, then granulating it, such as by a rolling granulation, to obtain spherical granules having a predetermined grain size, carrying out the first calcination comprising a calcination at a temperature of 100 to 1200° C, treating the granules, by dipping them into a mineral acid, such as hydrochloric acid or sulfuric acid, to remove alkali oxides, carrying out the second calcination comprising a calcination at a temperature of 100 to 1200° C, and then carrying out a grain size granulation by classification to obtain a predetermined grain size, e.g. by means of levitation, air elutriation and sieving.

The above method for preparing the column packings will be detailed by an example using sepiolite as a raw material.

First, after crushing the ceramics raw material by a conventional method, it is granulated. The granulation is preferably carried out to obtain the raw material in spherical shape.

The granulation method may include an extrusion granulation of the clay raw material comprising sepiolite powder by adding water, a rolling granulation comprising the dispersion granulation of sepiolite powder and a small amount of water in a mixer, and spray drying. Among them, the rolling granulation is preferable for granulation into a spherical shape. In addition, the spray drying method is preferable to obtain small grain size granules.

When carrying out the spray drying method, a slurry in which the raw sepiolite powder is dispersed in water or an organic solvent is prepared first. At that time, the slurry is preferably deflocculated as much as possible. There are many apparatus for carrying out the spray drying method, but a mechanism of spraying the slurry in a form of fine droplets is important. Any known method such as a method with a rotating disc, a method of spraying a slurry from a nozzle under pressure, a method of using two fluid spray nozzles may be used in the present invention. The grain diameters can be controlled by the selection of a particular method or system.

The grain size of the raw material obtained by granulation is in the range from 1 to 100µm. If the grain size is less than 1µm, this is not preferable since clogging occurs easily and a high pressure is required when used as HPLC column packings, although the theoretical plate numbers may be increased by increasing the surface area per unit amount of the column packings, i.e. by decreasing the grain size in order to increase the area contact with the samples. On the other hand, if the grain size is more than 100µm, the separating efficiency decreases and this is not preferable.

In order to impart strength to the granules thus prepared, an organic binder, such as cellulose, and an inorganic binder, such as waterglass, may be first added to the slurry.

Then, the granules prepared are calcined first. The first calcination is done in order to avoid the change of the shape of the granules by the treatment by dipping in acid solution in the next acid treatment step. The first calcination temperature is preferably in the range from 100 to 1200° C. If the calcination temperature is less than 100° C, deformation of the shape easily occurs. If the calcination temperature is more than 1200° C, the removal of impurities owing to the acid treatment is difficult and thus it is not preferable.

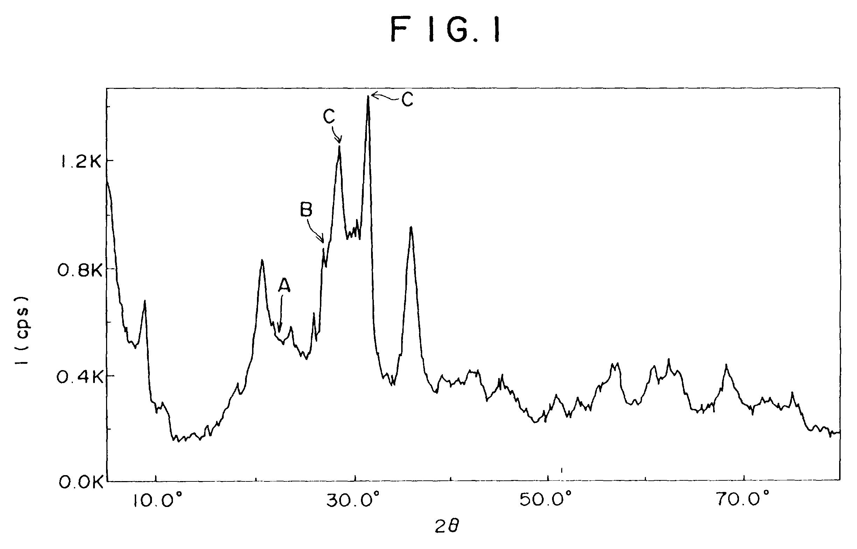

When sepiolite is calcined first, it becomes metasepiolite with the adsorbed water and the water of crystallization removed. When it is further treated thermally at a higher temperature, it becomes crystal such as enstatite, quartz, crystobalite. The X ray diffraction data at the time is shown in Fig.1.

Then alkali metal oxides or alkaline earth metal oxides contained in sepiolite are removed by acid treatment.

Namely, sepiolite raw material usually contains many impurities and contains MgO, Al₂O₃, Fe₂O₃, CaO, K₂O, Na₂O or the like besides the principal component SiO₂ even after the purification though the amounts are very small. These impurities are preferably removed as much as possible. Fortunately, almost all impurities are alkali metal oxides and MgO or alkaline earth metal oxides and are soluble in acid so that they can be removed by a treatment by dipping in acid solution.

As a method for removing such impurities by acid treatment, a technique of eluting components other than the principal component SiO₂ by dipping sepiolite ceramics calcined provisionally at 800° C in hydrochloric acid, pH 2, for 24 hours is disclosed in Japanese Unexamined Patent Publication No.Sho 4-183393. In the present invention, such acid treatment can also be carried out.

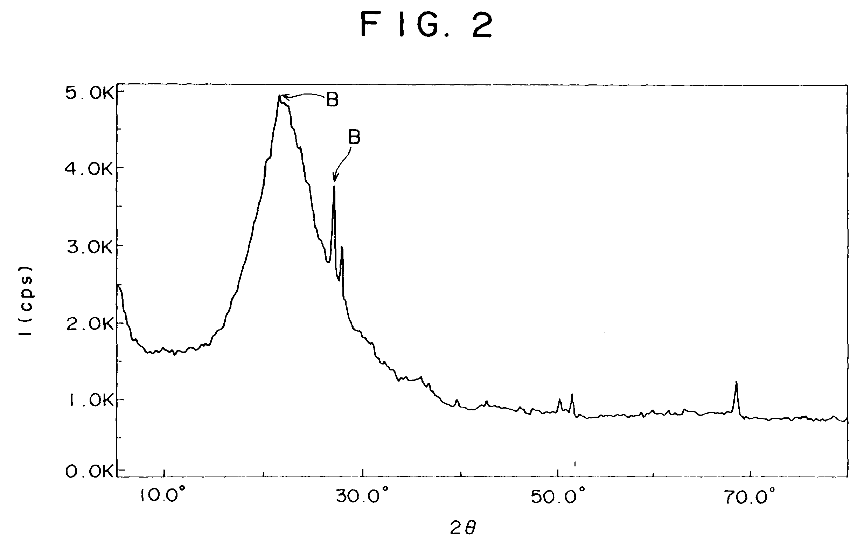

Fig.2 shows X ray diffraction data of the sepiolite in which non-crystalline SiO₂ is formed by removing MgO which has been contained in crystal when a zeolite having the X ray diffraction data after the first calcination shown in Fig.1 is treated by acid.

The non-crystalline SiO₂ may be formed by removing MgO from sepiolite, metasepiolite or enstatite crystals to destroy the crystal structure.

The acid solution may include mineral acids such as hydrochloric acid, sulfuric acid, and phosphoric acid.

The lower the pH and the higher the concentration the acid solution are, the faster the alkali metal oxides, and alkaline earth metal oxides, such as MgO can be removed. Although the performance as column packings depends on their composition, the composition of final column packings may be controlled by the acid treatment. The SiO₂ ratio is preferably controlled from 60 to 100%.

In addition, by the removal of MgO, the part where MgO was eluted is provided with new pores. The pore size is about 0.1µm or less. The specific surface area increased by the formation of new pores due to the removal of about 25% MgO is about 100m² or more per 1g of the column packings and thus the formation of new pores is a factor causing an improvement in performance as column packings. However, a certain amount of MgO is preferably remained rather than all MgO is removed from the viewpoint of the characteristics as HPLC stationary phase. The particularly preferable amount of MgO contained in the porous ceramics is 30% or less.

With the present invention, the pores formed by the removal of MgO by acid treatment may have uniform shape and uniform pore size, whereas with the conventional methods for preparing ceramics, the pore formation is changed depending on calcination conditions, and ceramics having a uniform pore size can not be obtained.

After treatment with acid solution, a further calcination is carried out, in order to give high mechanical strength.

The second calcination temperature must be set to avoid decrease of the pore volume and is preferably in the range from 100 to 1200° C, more preferably in the range from 800 to 1100° C. If the calcination temperature is less than 100° C, the mechanical strength of the column packings is decreased. If the calcination temperature is more than 1200° C, the pore volume decreases, which is not preferable.

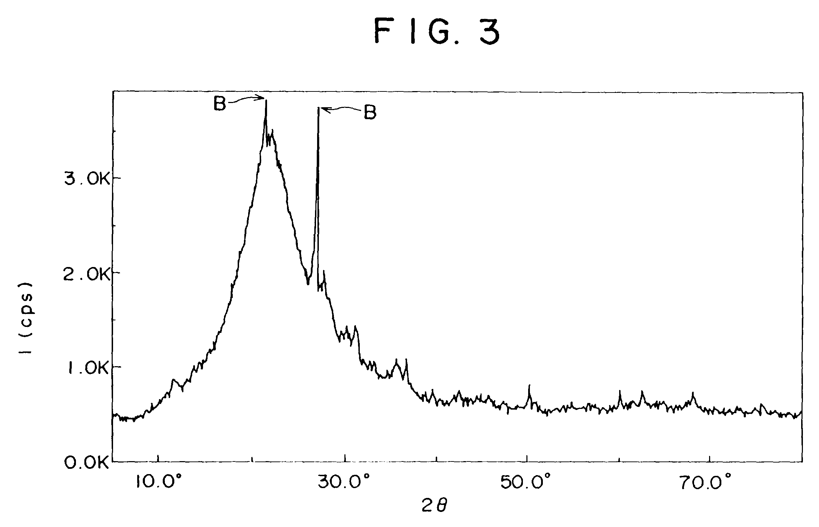

After the second calcination is carried out, sintering increases and the amount of the non-crystalline SiO₂ crystallizing increases. These changes are shown in the X ray diffraction pattern of Fig.3.

The column packings of the present invention contain non-crystalline SiO₂ and crystalline SiO₂ as principal components. The non-crystalline SiO₂ has a high surface energy and may be bonded to water easily to form silanol groups that are hydrophilic groups. The hydrophilic group fulfill the important functions of the column packings of the present invention.

The final pore size and pore volume of the column packings are determined by the calcining conditions after granulation, the treatment conditions in an acid solution and the calcining conditions after the acid solution treatment. The setting of the conditions is important since the characteristics as column packings depends on the pore distribution.

In particular, the median pore diameter of the column packings of the present invention is important. If the median pore diameter is more than 0.1µm, the separating ratio decreases, and thus this is not preferable. If the pore size is less than 0.001µm, clogging of the pores occurs which causes scattering of separating data, and thus this is not preferable. Accordingly, the median pore diameter of the column packings of the present invention is in the range from 0.001µm to 0.1µm.

Although with the above procedures column packings may be prepared, if a uniform grain size is not obtained, a predetermined uniform grain size may be obtained by means of levitation, air elutriation or screening.

The column packings having uniform grain size, when filled into a column, may be used as a column for separation.

The column packings may be filled in a column and may be used to carry out liquid chromatography like conventional column packings for liquid chromatography.

The column packings of the present invention may be used for analyzing proteins, enzymes, nucleic acids, glycosides, vitamins, phospholipids, glycolipids, triglycerides and fatty acids. In particular, the column packings of the present invention exhibit an excellent function in the separation of fat-soluble vitamins, phospholipids, glycosides, triglycerides and fatty acids.

Eluents used in the separation may include conventional solutions, such as an acetonitrile/phosphate buffer solution or hexane/ethanol.

The column packings for liquid chromatography of the present invention can separate polar materials, which could not be separated efficiently with a conventional HPLC, using an eluent having high polarity in a short time. The column packings are thus useful as column packings for preparative chromatography and analytical chromatography.

In addition, the column packings for liquid chromatography of the present invention have a high mechanical strength and are pressure resistant and very stable against eluents having a high pH value and/or a high polarity so that the separating characteristics thereof are not changed even after a long time use.

### EMBODIMENTS

The present invention will be detailed by the following non-limiting examples.

### Example 1

### (rolling granulation method)

1.5L of water was added to 3kg of sepiolite grains having a grain size of 325 USS mesh (0.044mm) or less. The mixture was granulated into spherical granules having a grain size of 50µm by a rolling granulation with a mixer. After calcining the spherical granules at 900° C for four hours, they were treated by dipping in 3N hydrochloric acid for 96 hours to remove alkali oxides. After further calcining the granules at 1020° C for four hours, 2.5L of spherical porous ceramics of 45 to 53 µm was obtained by screening. The composition of the ceramics was determined by a fluorescent X ray analysis. The composition was: SiO₂ 97.31%, MgO 0.39%, Fe₂O₃ 0.23%, Al₂O₃ 1.39%, CaO 0.08%, K₂O 0.60% and traces of Na₂O.
The pore distribution of the column packings was further determined by a mercury penetration method. The results are shown in Table 1.

**TABLE 1**

| | | |
|---|---|---|
| True specific gravity | (g/cm³) | 2.0091 |
| Specific gravity | (g/cm³) | 0.9901 |
| | Total | 0.5423 |
| Pore volume (ml/g) | - 0.01µm | 0.0055 |
| | 0.01 - 0.03µm | 0.1052 |
| | 0.03 - 0.05µm | 0.1967 |
| | 0.05 - 0.07µm | 0.0855 |
| | 0.07 - 0.1 µm | 0.0371 |
| | 0.1 - 0.3 µm | 0.0189 |
| | 0.3 - 0.5 µm | 0.0109 |
| | 0.5 - 0.7 µm | 0.0054 |
| | 0.7 - 1 µm | 0.0045 |
| | 1 µm - | 0.0726 |
| Specific surface area (m²/g) | Total | 50.9331 |
| | 0.01µm - | 48.8983 |
| Median pore diameter (µm) | based on volume | 0.0452 |
| | based on surface area | 0.0301 |

(2) 1.5L of water was added to 3kg of sepiolite grains having a grain size of 325 USS mesh (0.044mm) or less. The mixture was granulated into spherical granules having a grain size of 50µm by a rolling granulation with a mixer. After calcining the spherical granules at 900° C for four hours, they were treated by dipping in 3N hydrochloric acid for 0.25 hours to remove alkali oxides. After further calcining the granules at 1020° C for four hours, 2.5L of spherical porous ceramics of 45 to 53 µm was prepared by screening.
The composition of the ceramics was determined by fluorescent X ray analysis. The composition was: SiO₂ 65.10%, MgO 28.12%, Fe₂O₃ 1.42%, Al₂O₃ 2.75%, CaO 1.83%, K₂O 0.67% and Na₂O 0.11%.
The pore distribution of the column packing was further determined by the mercury penetration method. The results are shown in Table 2.

**TABLE 2**

| | | |
|---|---|---|
| True specific gravity | (g/cm³) | 3.0392 |
| Specific gravity | (g/cm³) | 1.1823 |
| | Total | 0.5168 |
| Pore volume (ml/g) | - 0.01µm | 0.0152 |
| | 0.01 - 0.03µm | 0.1333 |
| | 0.03 - 0.05µm | 0.3141 |
| | 0.05 - 0.07µm | 0.0237 |
| | 0.07 - 0.1 µm | 0.0076 |
| | 0.1 - 0.3 µm | 0.0096 |
| | 0.3 - 0.5 µm | 0.0019 |
| | 0.5 - 0.7 µm | 0.0016 |
| | 0.7 - 1 µm | 0.0011 |
| | 1 µm - | 0.0087 |
| Specific surface area (m²/g) | Total | 66.1217 |
| | 0.01µm - | 58.4888 |
| Median pore diameter (µm) | based on volume | 0.0354 |
| | based on surface area | 0.0302 |

### Example 2

### (spray drying method)

(1) 5L of water was added to 2kg of sepiolite grains having grain sizes of 325 USS mesh (0.044mm) or less. The mixture was stirred for 30 minutes with a homogenizer to form a dispersion. At that time, 40g of ammonium carbonate was added simultaneously as deflocculant. 1.4kg of granulated spherical granules of 50µm were obtained under the following conditions: disc revolution number 8000rpm, slurry feed rate 50cc/min, hot air temperature 200° C and exhaust temperature 110° C. After calcining the spherical granules at a calcining temperature of 900° C for four hours, the granules were treated by dipping in 3N hydrochloric acid for 96 hours to remove alkali oxides. After further calcining the granules at 1020° C for four hours, 1.4kg of spherical porous ceramics of 50µm was obtained.
(2) 5L of water was added to 250g of sepiolite grains having grain sizes of 325 USS mesh (0.044mm) or less. The mixture was stirred for 30 minutes with a homogenizer to form a dispersion. At that time, 5g of ammonium carbonate was added simultaneously as deflocculant. 150g of granulated spherical granules of 5µm were obtained under the following conditions: disc revolution number 15000rpm, slurry feed rate 50cc/min, hot air temperature 200° C and exhaust temperature 110° C. After calcining the spherical granules at calcining temperature of 900° C for four hours, the granules were treated by dipping in 3N hydrochloric acid for 96 hours to remove alkali oxides. After further calcining the granules at 1020° C for four hours, 150g of spherical porous ceramics of 5µm was obtained

### Example 3

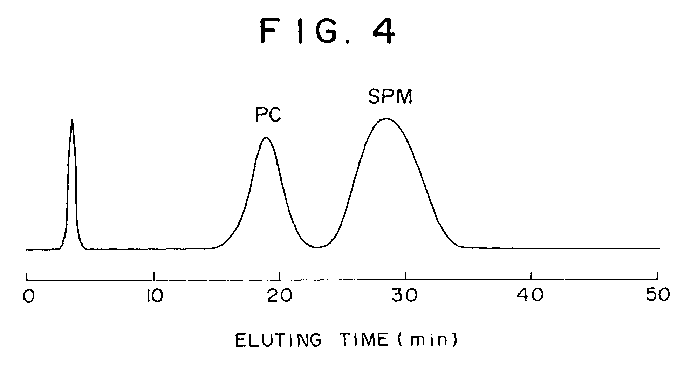

The spherical porous ceramics prepared in Example 1(2) were dispersed in solution of methanol/glycerin (1:1) and slurry-filled into a column having an inner diameter of 3mm and a length of 300mm. An eluent mixture containing 1 part by weight of 10mM phosphorate buffer solution (pH2.6) containing 100mM sodium perchlorate, and 9 parts by weight of acetonitrile was flown through the column at a flow rate of 1ml/min to equilibrate the column sufficiently. 5µl of a sample containing 10mg of phosphatidylcholine (PC) and 50mg of sphingomyelin (SPM) dissolved in 60ml of ethanol was injected into the column, and the phospholipids eluted from the column were detected with a UV detector at 205nm. The column temperature was 45° C. The results of the detection are shown in Fig.4. As shown in Fig.4, PC and SPM were satisfactorily separated and eluted after 18.9 min and 28.5 min, respectively.

### Example 4

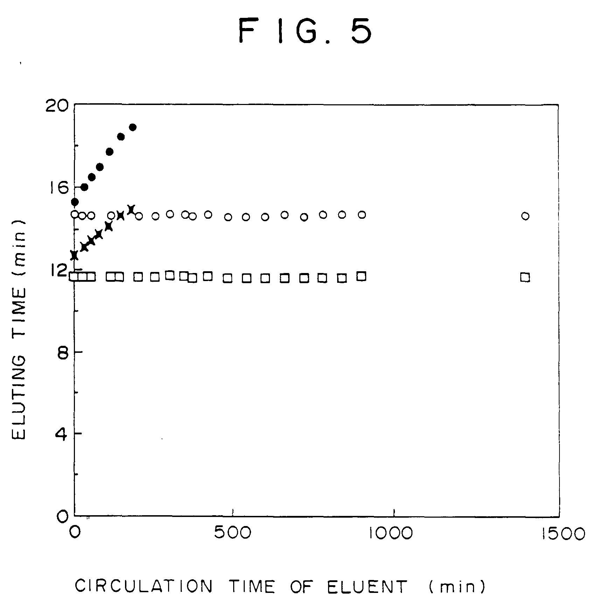

An eluent mixture containing 14 parts by weight of 10mM phosphoric buffer solution (pH2.6) containing 100mM sodium perchlorate, and 86 parts by weight of acetonitrile was flown through the column used in Example 2 at a flow rate of 1ml/min to equilibrate the column sufficiently. 5µl of a sample containing 10mg of phosphatidylcholine (PC) and 50mg of sphingomyelin (SPM) dissolved in 60ml of ethanol was injected into the column, and the phospholipids eluted from the column were detected with a UV detector at 205nm. After all phospholipids were eluted, the procedure of injecting the sample into the column was repeated, and the changes of the retention times of each phospholipids were checked. As a comparative example, silica gel commercially available was filled in a column as described in Example 2, and the sample was injected repeatedly in a similar manner, and the changes of the retention time of phospholipids were observed. The retention times of phospholipids in each column are shown in Fig.5. The ceramics packed column showed no changes of the retention times of phospholipids after 1400 hours, whereas the silica gel column showed a clear increase of the retention time with the flowing time of the eluent.

### Example 5

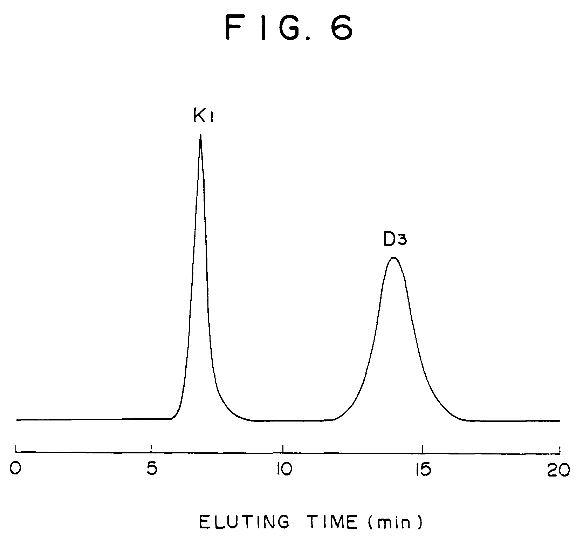

The spherical porous ceramics prepared in Example 1(2) were dispersed in a solution of methanol/glycerin (1:1) and slurry-filled into a column having an inner diameter of 3mm and a length of 300mm. Eluent of hexane/ethanol (99.5/0.5) was flown through the column at a flow rate of 1ml/min to equilibrate the column sufficiently. 10µl of a sample containing 100mg of vitamin K₁ and 100mg of vitamin D₃ dissolved in 1ml of hexane was injected into the column, and the vitamins eluted from the column were detected with a UV detector at 245nm. The column temperature was 20° C. The results of the detection are shown in Fig.6. As shown in Fig.6, the vitamin K₁ and the vitamin D₃ were satisfactorily separated and eluted after 6.6 min. and 13.8 min., respectively.

As described above, the column packings for liquid chromatography provided by the present invention are very stable to eluents having a high pH value and eluents having a high polarity, the separating characteristics are not changed even after a long time use, and they can separate samples in high efficiency.

The column packings for liquid chromatography of the present invention can separate lipid related materials which could not be separated in high efficiency and in particular, it is appropriate for analysis of phospholipids and fat-soluble vitamins.

## Claims

1. Column packings for liquid chromatography comprising porous ceramic granules, characterized in that the porous ceramic granules have hydrophilic surfaces and a median pore diameter in the range from 0.001 µm to 0.1 µm, and that the porous ceramic granules are prepared by the steps comprising
(a) calcining granules of a crystalline clay mineral having a fibrous structure and a grain size in the range from 1 to 100 µm;
(b) subjecting the granules to an acid treatment to render the surfaces of said granules hydrophilic; and
(c) calcining the granules a second time to avoid any decrease in pore volume, the resultant porous ceramic granules having an SiO₂ content of 60% or more.

2. Column packings for liquid chromatography as claimed in claim 1, wherein the fibrous structure is a fibrous crystal structure containing parallelepiped intracrystalline tunnels along the fibers.

3. Column packings for liquid chromatography as claimed in claims 1 or 2, wherein the crystalline clay mineral is sepiolite or attapulgite.

4. Column packings for liquid chromatography as claimed in any one of claims 1 to 3, wherein the MgO content of the porous ceramic granules is 30 % or less.

5. A method for separating lipids comprising the steps of:
filling the column packings for liquid chromatography as claimed in any one of claims 1 to 4 into a column;
injecting a sample containing lipids; and
flowing an eluent through the column to separate and elute the lipids in the sample.

6. A method for separating lipids as claimed in claim 5 wherein the lipids are phospholipids.

7. A method for separating vitamins comprising the steps of:
filling the column packings for liquid chromatography as claimed in any one of claims 1 to 4 into a column;
injecting a sample containing vitamins; and
flowing an eluent through the column to separate and elute the vitamins in the sample.

8. A method for separating vitamins as claimed in claim 7, wherein the vitamins are fat-soluble vitamins.

## Patentansprüche

1. Säulenpackungen für die Flüssigkeitschromatographie, enthaltend poröse keramische Körner, dadurch gekennzeichnet, daß die porösen keramischen Körner hydrophile Oberflächen und einen mittleren Porendurchmesser im Bereich zwischen 0,001 µm und 0,1 µm aufweisen und daß die porösen keramischen Körner nach den [folgenden] Schritten hergestellt werden:
(a) Calcinieren von Körnern eines kristallinen Tonminerals mit einer faserigen Struktur und einer Korngröße im Bereich zwischen 1 und 100 µm;
(b) Behandein der Körner mit einer Säure, um die Oberfläche der Körner hydrophil zu machen; und
(c) Zweites Calcinieren der Körner, um eine Abnahme des Porenvolumens zu vermeiden, wonach die erhaltenen porösen keramischen Körner einen SiO₂-Gehalt von 60% oder mehr aufweisen.

2. Säulenpackungen für die Flüssigkeitschromatographie nach Anspruch 1, worin die faserige Struktur eine faserige Kristallstruktur darstellt, die entlang der Fasern parallelepipedische intrakristalline Tunnel enthält.

3. Säulenpackungen für die Flüssigkeitschromatographie nach Anspruch 1 oder 2, worin das kristalline Tonmineral Sepiolith oder Attapulgit darstellt.

4. Säulenpackungen für die Flüssigkeitschromatographie nach einem der Ansprüche 1 bis 3, worin der MgO-Gehalt der porösen keramischen Körner 30% oder weniger beträgt.

5. Verfahren zur Trennung von Lipiden, welches die [folgenden] Schritte umfaßt:
Einfüllen der Säulenpackungen für die Flüssigkeitschromatographie nach einem der Ansprüche 1 bis 4 in eine Säule;
Injizieren einer Lipide enthaltenden Probe; und
Elution der Säule, um die in der Probe enthaltenen Lipide zu trennen und zu eluieren.

6. Verfahren zur Trennung von Lipiden nach Anspruch 5, wobei die Lipide Phospholipide sind.

7. Verfahren zur Trennung von Vitaminen, welches die [folgenden] Schritte umfaßt:
Einfüllen der Säulenpackungen für die Flüssigkeitschromatographie nach einem der Ansprüche 1 bis 4 eine Säule;
Injizieren einer Vitamine enthaltenden Probe; und
Elution der Säule, um die in der Probe enthaltenen Vitamine zu trennen und zu eluieren.

8. Verfahren zur Trennung von Vitaminen nach Anspruch 7, wobei die Vitamine fettlösliche Vitamine sind.

## Revendications

1. Garniture de colonne pour chromatographie en phase liquide comprenant des granules en matériau céramique poreux, caractérisée en ce que les granules en matériau céramique poreux ont des surfaces hydrophiles et un diamètre de pore moyen compris entre 0,001 µm et 0,1 µm, et en ce que les granules en matériau céramique poreux sont préparés par les étapes comprenant
(a) la calcination de granules à base d'un composant minéral d'argile cristalline ayant une structure fibreuse et une granulométrie comprise entre 1 et 100 µm ;
(b) la soumission des granules à un traitement acide en vue de rendre hydrophiles les surfaces desdits granules ; et
(c) une seconde calcination des granules pour éviter toute diminution do volume poreux, les granules en matériau céramique poreux résultants ayant une teneur en SiO₂ de 60% ou plus.

2. Garniture de colonne pour chromatographie en phase liquide selon la revendication 1, dans laquelle la structure fibreuse est une structure cristalline fibreuse contenant des tunnels intracristallins parallélipèdiques le long des fibres.

3. Garniture de colonne pour chromatographie en phase liquide selon la revendication 1 ou 2, dans laquelle le composant minéral d'argile cristalline est la sépiolite ou l'attapulgite.

4. Garniture de colonne pour chromatographie en phase liquide selon l'une quelconque des revendications 1 à 3, dans laquelle la teneur en MgO des granules en matériau céramique poreux est de 30% ou moins.

5. Procédé de séparation de lipides comprenant les étapes consistant en :
le remplissage de la garniture de colonne pour chromatographie en phase liquide selon l'une quelconque des revendications 1 à 4 dans une colonne;
l'injection d'un échantillon contenant des lipides ; et
l'écoulement d'un éluant à travers la colonne pour séparer et éluer les lipides contenus dans l'échantillon.

6. Procédé de séparation de lipides selon la revendication 5, dans lequel les lipides sont des phospholipides.

7. Procédé de séparation de vitamines comprenant les étapes consistant en
le remplissage de la garniture de colonne pour chromatographie en phase liquide selon l'une quelconque des revendications 1 à 4 dans une colonne ;
l'injection d'un échantillon contenant des vitamines ; et
l'écoulement d'un éluant à travers la colonne pour séparer et éluer les vitamines contenues dans l'échantillon.

8. Procédé de séparation de vitamines selon la revendication 7, dans lequel les vitamines sont des vitamines liposolubles.
